# EUROPEAN PATENT SPECIFICATION

(11) **EP 3 225 710 B1**
(45) Date of publication and mention of the grant of the patent: **18.08.2021**
(21) Application number: 15863020.2
(22) Date of filing: 04.11.2015
(51) Int. Cl.: C22C 38/58, C22C 38/54, C22C 38/38, C22C 38/32, C21D 8/02, C21D 1/18, C21D 1/25, C22C 38/00, C22C 38/02, C22C 38/04, C22C 38/06, C22C 38/22, C22C 38/24, C22C 38/26, C22C 38/28, B21B 15/00, B21B 1/22

(54) **LOW-ALLOY HIGH-STRENGTH HIGH-TENACITY STEEL PANEL AND METHOD FOR MANUFACTURING SAME**
HOCHFESTE NIEDRIGLEGIERTE STAHLPLATTE MIT HOHER ZÄHIGKEIT UND VERFAHREN ZUR HERSTELLUNG DAVON
PANNEAU EN ACIER À HAUTE TÉNACITÉ, À FORTE RÉSISTANCE ET FAIBLEMENT ALLIÉ ET SON PROCÉDÉ DE FABRICATION

(30) Priority: 28.11.2014 CN 201410707715
(43) Date of publication of application: 04.10.2017
(73) Proprietor: Baoshan Iron & Steel Co., Ltd., Shanghai 201900 (CN)
(72) Inventor: YUAN, Xiangqian, Shanghai 201900 (CN); LI, Hongbin, Shanghai 201900 (CN); JIAO, Sihai, Shanghai 201900 (CN); YAO, Liandeng, Shanghai 201900 (CN)
(74) Representative: Kuhnen & Wacker Patent- und Rechtsanwaltsbüro PartG mbB
(86) International application number: PCT/CN2015/093744
(87) International publication number: WO 2016/082669

(56) References cited:
- EP-A1- 0 647 484
- WO-A1-2014/019352
- WO-A1-2014/154104
- CN-A- 101 376 947
- CN-A- 101 906 569
- CN-A- 104 480 406
- JP-A- H0 899 107
- JP-A- 2010 111 931
- JP-A- 2011 052 321
- JP-A- 2011 089 167
- US-A- 4 294 394
- US-A1- 2010 230 016
- None

## Description

### Technical Field

The present invention belongs to the field of metallurgical technology, and particularly relates to a low-alloy high-strength high-toughness steel plate and a method for manufacturing same.

### Background Art

Mechanical devices for engineering, mining, metallurgy and the like, such as parts of bulldozers, excavators, scraper conveyors, etc., usually require steel plates with a high strength, a high hardness, a high toughness and other characteristics. Moreover, large crushers and large excavators and other special devices require steel plates having a great thickness, and the thickness may be up to 100 mm or more. For industrialized production, generally a continuous casting method is used to produce a continuous casting slab, and then a rolling method is performed to obtain a steel plate with a certain thickness, wherein the thickness of the continuous casting slab is generally 200-300 mm, the great-thickness high-strength high hardness steel plate thus produced often has a core quality that is difficult to guarantee, and it is difficult to fully meet needs of working conditions; for the production of a casting using a casting method, there are defects of a high alloy content, a poor internal quality, being easy to crack during use, etc., which significantly reduce the service life of the product; and for production using a die-casting method, although a great-thickness steel plate can be produced, there are defects of a long production procedure, a low finished product rate, a high production cost etc., which are disadvantageous for product market promotion.

Chinese patent CN 1140205 A discloses a medium-to-high-carbon medium-alloy wear-resistant steel produced using a casting process, and the contents of carbon and alloy elements (Cr, Mo and the like) are higher, which inevitably results in poor welding properties and poor mechanical processing properties, as well as a low service life.

WO 2014/154104 A1 discloses a low alloy high toughness wear-resistant steel plate with thicknesses from 16 mm to 50 mm and its manufacturing method.

### Summary of the invention

It is an object of the present invention to provide a low-alloy high-strength high-toughness steel plate and a method for manufacturing same, the mechanical properties of the high-strength high-toughness steel plate are: a Brinell hardness of 390 HB to 460 HB, a yield strength of 900 MPa to 1100 MPa, a tensile strength of 1100 MPa to 1400 MPa, an elongation rate of 11% to 15%, a Charpy V-notch longitudinal impact energy at -40°C of ≥ 40 J, and a plate thickness of up to 100 mm or greater. The microstructure of the steel is martensite + residual austenite or martensite + bainite + residual austenite, and the steel achieves a match of a high strength, a high hardness and a high toughness, has good mechanical processing properties, and is conducive to a wide range of engineering applications.

In order to achieve the above-mentioned object, the technical solution of the present invention is as defined in the appended claims.

In the composition design of the steel of the present invention, the functions of the main chemical elements are as follows:
Carbon: Carbon is the most basic and the most important element in steel, and the element enhances the strength, hardness and wear resistance of a steel by solid solution strengthening and precipitation strengthening. An excessively high carbon content is detrimental to the toughness and weldability of the steel; and an excessively low carbon content reduces the mechanical properties and wear resistance of the steel. Therefore, the carbon content is controlled at 0.08-0.25%.
Silicon: Silicon is a useful deoxidizer in a steel, can form calcium aluminosilicate inclusions easily floating upward together with calcium and aluminium in the steel, improving the purity of the steel. Silicon is subjected to solid solution in ferrite and austenite, to improve their hardness and strength, but excessive silicon may result in sharply decreasing the toughness of the steel. Therefore, the silicon content is controlled at 0.10-1.00%.
Manganese: Manganese improves the hardenability of a steel; however, when the manganese content is higher, there is a tendency of grain coarsening, easily leading to segregation and cracks appearing in the casting slab. Therefore, the manganese content is controlled at 0.50-2.00%.
Chromium: Chromium can improve the hardenability of a steel and improve the strength and hardness of the steel. Chromium can prevent or slow down the precipitation and aggregation of carbides during tempering, which can improve the tempering stability of the steel. Therefore, the chromium content is controlled at 0.10-2.00%.
Molybdenum: Molybdenum can refine grains, and improve the strength and toughness. Molybdenum is an element that reduces the tempering brittleness, and can improve the tempering stability. However, an excessively high molybdenum content can substantially increase the cost. Therefore, the molybdenum content is controlled at 0-1.00%.
Nickel: Nickel has an effect of significantly reducing the cold brittleness transition temperature; however, an excessively high content easily causes the difficulty of descaling on the surface of the steel plate and the cost is increased significantly. Therefore, the nickel content is controlled at 0-2.00%.
Niobium: Niobium increases the strength and toughness of a steel by grain refining. Therefore, the niobium content is controlled at 0.010-0.080%.
Vanadium: The addition of vanadium is mainly to refine grains so as to enable that austenite grains will not grow too coarse in the steel slab heating stage, so that in a subsequent multi-pass rolling process, the grains of the steel are further refined, thereby improving the strength and toughness of the steel. Therefore, the vanadium content is ≤ 0.10%.
Titanium: Titanium is one of strong carbide-forming elements, and forms fine TiC particles with carbon. TiC particles are small and distributed in the grain boundary to achieve an effect of grain refining, and harder TiC particles improve the wear resistance of the steel. However, an excessively high titanium content can reduce the toughness of the steel. Therefore, the titanium content is ≤ 0.060%.
Boron: Boron increases the hardenability of a steel; however, an excessively high content will lead to a hot shortness phenomenon, affecting the weldability and hotworkability of the steel. Therefore, the boron content is controlled at 0.0005-0.0040%.
Aluminium: Aluminium can refine the grains of a steel, immobilize nitrogen and oxygen in the steel, and reduce the sensitivity of the steel to a notch. Therefore, the aluminium content is controlled at 0.010-0.080%.
Calcium: Calcium has a significant effect on the modification of inclusions in the casting steel, and the addition of an appropriate amount of calcium in the casting steel can convert elongated sulphide inclusions in the casting steel into spherical CaS or (Ca, Mn)S inclusions, wherein the oxide and sulphide inclusions formed with calcium have small densities and tend to float and to be removed. Therefore, the calcium content is controlled at 0.010-0.080%.
Phosphorus and sulphur: In wear-resistant steels, sulphur and phosphorus are both harmful elements, and their contents should be strictly controlled. Therefore, the phosphorus content is < 0.020 wt.% and the sulphur content is < 0.010 wt.%.
Nitrogen, oxygen and hydrogen: Excessive nitrogen, oxygen and hydrogen in the steel are very unfavourable to the properties, especially weldability, impact toughness and crack resistance, of the steel, and reduce the quality and service life of the steel; however, an excessively strict control will substantially increase the production. Therefore, the nitrogen content is ≤ 0.0080%, the oxygen content is ≤ 0.0080%, and the hydrogen content is ≤ 0.0004%.

The present invention is controlled to have 0.010% ≤ Al + Ti ≤ 0.13%: titanium can form fine particles, thereby refining the grains, and aluminium can ensure the formation of fine titanium particles and gives full play to the role of titanium in grain refining; for this reason, the contents of aluminium and titanium must meet the following relationship: 0.010% ≤ Al + Ti ≤ 0.13%.

The present invention is controlled to have 0.20% ≤ (Cr/5 + Mn/6 + 50B) ≤ 0.55%: in the present invention, chromium, manganese and boron mainly improve the hardenability of the steel, but the effect of each element on the hardenability of the steel is different. Therefore, in the present invention, "Cr/5 + Mn/6 + is expressed as an equivalent affecting the hardenability of the steel, and with this equivalent, the content and proportion of each alloy element are controlled reasonably so as to achieve the best effect: neither reducing the hardenability of the steel due to a lower content, nor having an excessively great surplus amount due to an excessively high content that results in a waste of the alloy element, reduces the toughness, weldability, etc., of the steel.

The present invention is controlled to have 0.02% ≤ (Mo/3 + Ni/5 + 2Nb) ≤ 0.45%: in the present invention, molybdenum, nickel and niobium mainly improve the toughness of the steel, but the effect of each element on the steel is different. Therefore, in the present invention, "Mo/3 + Ni/5 + 2Nb" is expressed as an equivalent affecting the toughness of the steel, and with this equivalent, the content and proportion of each alloy element are controlled reasonably so as to achieve the best effect: neither reducing the toughness of the steel due to a lower content, nor having an excessively great surplus amount due to an excessively high content that results in a waste of the alloy element, a substantial increase in the alloy cost of the steel, even a reduction of weldability of the steel, etc.

The method for manufacturing the low-alloy high-strength high-toughness steel plate of the present invention is as defined in appended claim 2.

Further, a continuous casting process may be used for said casting in step (1), at a continuous casting drawing speed of ≤ 1.0 m/min.

The effects of the manufacturing process of the present invention are as follows: the present invention ensures a continuous casting withdrawal speed ≤ 1.0 M/min, and the effects of an uniform composition inside the casting slab and a good surface quality are achieved.

Compounding: The mechanical processing and the welding closure and vacuumization on the slab are the basis of smooth rolling, and if the compounding is inappropriate, the mechanical properties of the steel will be reduced, the service life of the steel will be shortened, and even a slab cracking phenomenon may occur in the rolling process.

Slab heating: Slab heating temperature and holding time are important prerequisites to ensure the smooth rolling of the slab, and should be strictly controlled. The heating temperature for the continuous casting slab or the initial rolling slab is controlled between 1000°C and 1250°C, and the holding time is between 1 h and 5 h: In the case of ensuring that the austenite grains do not grow up, an uniform austenitized structure is obtained, and particularly the compound cross section achieves a metallurgical combination, smooth rolling is ensured, the mechanical properties of the steel are guaranteed and steel plate cracking is prevented.

Slab rolling and on-line cooling: rolling temperature and cooling temperature are important parameters to ensure the structure and properties of the steel plate. In the step, when the starting rolling temperature is controlled at 1000-1150°C and the finishing rolling temperature is controlled at 780-980°C, the deformed austenite can be easily homogenized, and after the rolling, the steel plate is directly cooled with water to obtain a uniform structure, ensuring the uniformity of the thickness of steel plate.

Out-line quenching and tempering If out-line quenching and tempering heat treatment are used for the steel plate, the heat treatment temperature and maintaining time need to be strictly controlled to ensure the properties of the steel plate. In the step, the tempering temperature is 800-950°C, and the holding time after the core portion of the steel plate reaching the temperature is 10-90 min; and the tempering temperature is 100-450°C, and the holding time after the core portion of the steel plate reaching the temperature is 30-120 min.

After detection, the mechanical properties of the low-alloy high-strength high-toughness steel plate of the present invention are as follows: a Brinell hardness of 390 HB to 460 HB, a yield strength of 900 MPa to 1100 MPa, a tensile strength of 1100 MPa to 1400 MPa, an elongation rate of 11% to 15%, a Charpy V-notch longitudinal impact energy at -40°C of ≥ 40 J, and a plate thickness of up to 100 mm or greater. The microstructure of the steel of the present invention is martensite and residual austenite or martensite, bainite and residual austenite. It can be seen that the steel plate obtained by the control of the carbon and alloy element contents and various heat treatment processes in the present invention has a low cost, a simple process, a high hardness, a low lowtemperature toughness, excellent mechanical processing properties, and easy weldability, and is suitable for easy-wear parts in various mechanical devices, particularly great-thickness devices.

The present invention has the following beneficial effects:
1) with regard to the chemical composition, the present invention mainly has low carbon and low alloy, and makes full use of the characteristics of refining, strengthening and the like of microalloy elements such as Cr, Mo, Nb and Ti, so as to ensure the steel plate to have good mechanical properties, excellent weldability, etc.
2) In the production process, the present invention uses two/more slabs for compounding slab assembly, thus solving a problem of thick-dimension slab supply. After the compounding, the compound slab has a thickness increased by 1 or more folds on the basis of the original single continuous casting, and after the increase in slab thickness, the thickness of a product from the slab is also increased. Through the control of starting rolling temperature, finishing rolling temperature, cooling temperature and other process parameters in the TMCP process, the structure refining and strengthening effects on the product are increased, thereby reducing the carbon and alloy elements, so that a steel plate with the excellent mechanical properties, welding performance, etc., is obtained. Moreover, the process further has the characteristics of a short production flow, a high efficiency, being energy-saving, a low cost and the like.
3) In the production process, an out-line quenching + tempering process can also be used for the present invention, wherein a great-thickness wear-resistant steel plate can be obtained by a reasonable match of quenching temperature and time, tempering time and temperature, and other parameters. The product involved in the invention is reasonable in production process, has broader ranges of process parameters, and is suitable for industrial production.
4) In production specifications, a compound rolling method is used in the invention, a great-thickness wear-resistant steel plate excellent in quality can be produced, and the thickness can be up to 100 mm or greater, meeting the requirements of large crushers and large excavators and other special devices for great-thickness steel plates.
5) In terms of product performance, the low-alloy high-strength high-toughness steel plate of the present invention has a Brinell hardness of 390 HB to 460 HB, a yield strength of 900 MPa to 1100 MPa, a tensile strength of 1100 MPa to 1400 MPa, an elongation rate of 11% to 15%, a Charpy V-notch longitudinal impact energy at -40°C of ≥ 40 J, and a plate thickness of up to 100 mm or greater, thus having advantages such as a high strength, a high hardness, a high toughness at a low temperature, as well as a good weldability.
6) In terms of microscopic structure, the low-alloy high-strength high-toughness steel plate of the present invention makes full use of the addition of alloy elements and the rolling and cooling control processes to obtain fine and uniform martensite + residual austenite or martensite + bainite + residual austenite, which benefits a good match of strength, hardness and toughness of the steel plate.

### Description of the Drawing

Figure 1 is a metallographic photograph of the matrix structure of a steel plate of Example 4 of the present invention.
Figure 2 is a metallographic photograph of the compound interface structure of the steel plate of Example 4 of the present invention.

### Particular Embodiments

The present invention is further illustrated below in conjunction with examples.

Table 1 is the chemical components of steel plates of Examples 1-6 and Comparative Example 1, the specific process parameters are as shown in Table 2, and the mechanical properties are as shown in Table 3.

The method for manufacturing the steel plates of Examples 1-6 and Comparative Example 1 (Comparative Example 1 being Example 2 in Patent No. CN 1865481 A) is: the corresponding smelting raw materials are subjected to the following steps successively: smelting→casting→compounding→heating→rolling → direct cooling after the rolling, or smelting→casting→compounding→heating→rolling→quenching→tempering.

It can be seen from Table 3 that the steel plate of the present invention has a Brinell hardness of 390 HB to 460 HB, a yield strength of 900 MPa to 1100 MPa, a tensile strength of 1100 MPa to 1400 MPa, an elongation rate of 11% to 15%, and a Charpy V-notch longitudinal impact energy at -40°C of ≥ 40 J. It is indicated therefrom that the steel plate of the present invention has the characteristics of a high strength, a high hardness and a high toughness, and has an excellent comprehensive performance, particularly superior to the mechanical properties of the steel plate of Comparative Example 1.

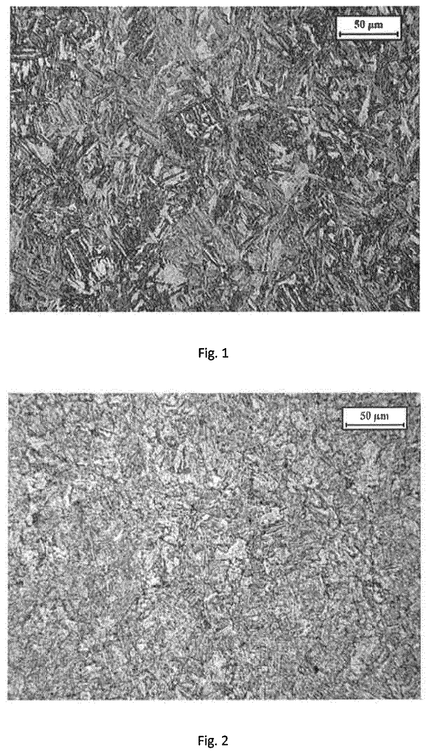

Figures 1 and 2 respectively provide the metallographic photographs of the matrix structure at a compound interface of the steel plate of Example 4 of the present invention. and it can be seen that after compound rolling and direct cooling after the rolling, the two slabs are well combined, without defects such as combination failure, cracking etc., so that the mechanical properties and service life of the steel plate can be ensured.

**Table 1 Chemical compositions of the embodiments (wt%)**

| | C | Si | Mn | P | S | Cr | Mo | Ni | Nb | V | Ti | Al | B | Ca | N | O | H |
|---|---|---|---|---|---|---|---|---|---|---|---|---|---|---|---|---|---|
| Example 1 | 0.08 | 0.65 | 1.93 | 0.012 | 0.003 | 0.55 | 0.21 | / | 0.031 | / | 0.011 | 0.033 | 0.0021 | 0.030 | 0.0037 | 0.0055 | 0.0003 |
| Example 2 | 0.11 | 0.51 | 1.77 | 0.010 | 0.008 | 0.56 | 0.26 | / | 0.015 | / | 0.023 | 0.041 | 0.0017 | 0.020 | 0.0055 | 0.0037 | 0.0003 |
| Example 3 | 0.15 | 0.39 | 1.58 | 0.009 | 0.002 | 0.46 | / | / | 0.037 | / | 0.016 | 0.022 | 0.0012 | 0.010 | 0.0041 | 0.0035 | 0.0002 |
| Example 4 | 0.18 | 0.27 | 1.63 | 0.011 | 0.005 | 0.61 | 0.42 | / | 0.033 | 0.05 | / | 0.051 | 0.0013 | 0.015 | 0.0042 | 0.0041 | 0.0002 |
| Example 5 | 0.21 | 0.22 | 1.18 | 0.010 | 0.004 | 0.53 | / | / | 0.051 | / | 0.016 | 0.062 | 0.0016 | 0.030 | 0.0051 | 0.0051 | 0.0003 |
| Example 6 | 0.25 | 0.31 | 0.76 | 0.007 | 0.008 | 1.20 | / | 0.87 7 | 0.022 | / | 0.021 | 0.035 | 0.0009 | 0.050 | 0.0033 | 0.0038 | 0.0003 |
| Comparative Example 1 | 0.30 | 0.8 | 2.05 | < 0.04 | < 0.03 | 0.6 | 0.6 | / | / | / | / | / | / | / | / | / | / |

**Table 2 Specific process parameters in Examples 1-6**

| | Slab heating temperatrue/°C | holding time/h | Starting rolling temperature/°C | Finishing rolling temperature/°C | Cooling method | Cooling temperature | Quenching temperature/°C | Quenching holding time/min | Tempering temperatre/°C | Tempering holding time/min | steel plate thickness/mm |
|---|---|---|---|---|---|---|---|---|---|---|---|
| Example 1 | 1080 | 2 | 1040 | 835 | Water cooling | 210 | / | / | / | / | 80 |
| Example 2 | 1190 | 2 | 1130 | 830 | Water cooling | 3 00 | / | / | / | / | 90 |
| Example 3 | 1180 | 2 | 1120 | 930 | Air cooling | Room temperature | 950 | 30 | 250 | 50 | 140 |
| Example 4 | 1130 | 3 | 1050 | 870 | Water cooling | 150 | / | / | / | / | 100 |
| Example 5 | 1150 | 3 | 1100 | 850 | Water cooling | Room temperature | / | / | / | / | 120 |
| Example 6 | 1250 | 4 | 1180 | 960 | Air cooling | Room temperature | 920 | 35 | 330 | 70 | 160 |

**Table 3 Mechanical properties of Examples 1-6 and Comparative Example 1**

| | Brinell hardness (HBW) | Transverse tensile | | | Charpy V-notch longitudinal impact energy (at -40°C), (J) |
|---|---|---|---|---|---|
| | | Yield strength (MPa) | Tensile strength (MPa) | Rate of elongation (%) | |
| Example 1 | 395 | 930 | 1130 | 15 | 71 |
| Example 2 | 408 | 965 | 1185 | 13 | 67 |
| Example 3 | 418 | 1010 | 1210 | 13 | 63 |
| Example 4 | 431 | 1050 | 1265 | 12 | 58 |
| Example 5 | 442 | 1080 | 1305 | 12 | 52 |
| Example 6 | 453 | 1095 | 1345 | 11 | 48 |
| Comparative example 1 | about 370 | - | 1100 | 13 | - |

## Claims

1. A low-alloy high-strength high-toughness steel plate having a plate thickness of 80 mm or greater, with the components in percentage by mass being: C: 0.08-0.25%; Si: 0.10-1.00%; Mn: 0.50-2.00%; P: < 0.020%; S: < 0.010%; Cr: 0.10-2.00%; Mo: 0-1.00%; Ni: 0-2.00%; Nb: 0.010-0.080%; V: ≤ 0.10%; Ti: ≤ 0.060%; B: 0.0005-0.0040%; Al: 0.010-0.080%; Ca: 0.010-0.080%; N: ≤ 0.0080%; O: ≤ 0.0080%; H: ≤ 0.0004%; and the balance being Fe and inevitable impurities, and at the same time, the foregoing elements satisfying the following relationships: 0.20% ≤ (Cr/5 + Mn/6 + 50B) ≤ 0.55%, 0.02% ≤ (Mo/3 + Ni/5 + 2Nb) ≤ 0.45%, and 0.01% ≤ (Al + Ti) ≤ 0.13%;
wherein said low-alloy high-strength high-toughness steel plate has a Brinell hardness of 390 HB to 460 HB, a yield strength of 900 MPa to 1100 MPa, a tensile strength of 1100 MPa to 1400 MPa, an elongation rate of 11% to 15%, and a Charpy V-notch longitudinal impact energy at -40°C of ≥ 40 J; and
wherein the microstructure of said low-alloy high-strength high-toughness steel plate is martensite + residual austenite or martensite + bainite + residual austenite.

2. A method for manufacturing a low-alloy high-strength high-toughness steel plate comprising the following steps:
1) Smelting and casting
performing smelting and casting based on the following ingredients to form a continuous casting slab, the chemical components of the low-alloy high-strength high-toughness steel plate in percentage by mass being: C: 0.08-0.25%; Si: 0.10-1.00%; Mn: 0.50-2.00%; P: < 0.020%; S: < 0.010%; Cr: 0.10-2.00%; Mo: 0-1.00%; Ni: 0-2.00%; Nb: 0.010-0.080%; V: ≤ 0.10%; Ti: ≤ 0.060%; B: 0.0005-0.0040%; Al: 0.010-0.080%; Ca: 0.010-0.080%; N: ≤ 0.0080%; O: ≤ 0.0080%; H: ≤ 0.0004%; and the balance being Fe and inevitable impurities, and at the same time, the foregoing elements satisfying the following relationships: 0.20% ≤ (Cr/5 + Mn/6 + 50B) ≤ 0.55%, 0.02% ≤ (Mo/3 + Ni/5 + 2Nb) ≤ 0.45%, and 0.01% ≤ (Al + Ti) ≤ 0.13%;
2) Compounding
subjecting a surface to be compounded of the continuous casting slab to surface iron oxide skin cleaning by using a mechanical method, and then subjecting the four edges of the surface to be compounded of the continuous casting slab to a bevelling processing; superimposing 2 or more continuous casting slabs, and subjecting the abutted surface of the continuous casting slabs to peripheral welding closure and vacuumization to obtain a compound plate slab;
3) Heating and rolling the compounded plate slab
heating the compounded plate slab at a temperature of 1000-1250°C and maintaining at the temperature for 1-5 h; and subjecting the compounded plate slab to a compounded rolling, wherein the starting rolling temperature is 1000-1150°C and the finishing rolling temperature is 780-980°C; and
after the rolling, performing one of the following alternatives:
4i) On-line cooling
after the rolling, performing direct water cooling to a temperature between room temperature and 450°C; or
4ii) Heat treatment after the rolling, performing direct air cooling to room temperature, followed by out-line quenching and tempering heat treatments, wherein the quenching temperature is 850-950°C, and the holding time after the core portion of the steel plate reaching the temperature is 10-90 min; and the tempering temperature is 100-450°C, and the holding time after the core portion of the steel plate reaching the temperature is 30-120 min.

3. A method for manufacturing the low-alloy high-strength high-toughness steel plate according to claim 2, **characterized in that** a continuous casting process is used for said casting in step (1), at a continuous casting drawing speed of ≤ 1.0m/min.

## Patentansprüche

1. Niedriglegierte, hochfeste, hochzähe Stahlplatte mit einer Plattendicke von 80 mm oder mehr, wobei die Bestandteile in Masseprozent betragen: C: 0,08-0,25 %; Si: 0,10-1,00 %; Mn: 0,50-2,00 %; P: <0,020 %; S: <0,010 %; Cr: 0,10-2,00 %; Mo: 0-1,00 %; Ni: 0-2,00 %; Nb: 0,010-0,080 %; V: ≤0,10 %; Ti: ≤0,060 %; B: 0,0005-0,0040 %; Al: 0,010-0,080 %; Ca: 0,010-0,080 %; N: ≤0,0080 %; O: ≤0,0080 %; H: ≤0,0004 %; wobei der Rest aus Fe und unvermeidbaren Unreinheiten besteht, und wobei die vorgenannten Elemente gleichzeitig die folgenden Verhältnisse erfüllen: 0,20 %≤Cr/5+Mn/6+50B)<0,55 %, 0,02 %≤(Mo/3+Ni/5+2Nb)≤0,45 %, und 0,01 %≤(Al+Ti)≤0,13 %;
wobei die niedriglegierte, hochfeste, hochzähe Stahlplatte eine Brinellhärte von 390 HB bis 460 HB, eine Streckgrenze von 900 MPa bis 1100 MPa, eine Zugfestigkeit von 1100 MPa bis 1400 MPa, einen Dehnungsfaktor von 11 % bis 15 % und eine Charpy-Kerblängsschlagenergie (V-Kerbe) bei -40 °C von ≥ 40 J aufweist; und wobei die Mikrostruktur der niedriglegierten, hochfesten, hochzähen Stahlplatte Martensit+verbleibender Austenit oder Martensit+Bainit+verbleibender Austenit ist.

2. Verfahren zum Herstellen einer niedriglegierten, hochfesten, hochzähen Stahlplatte, aufweisend die folgenden Schritte:
1) Schmelzen und Gießen
Durchführen von Schmelzen und Gießen auf Basis der folgenden Zutaten, um eine kontinuierliche Gußbramme zu bilden, wobei die chemischen Bestandteile der niedriglegierten, hochfesten, hochzähen Stahlplatte in Masseprozent betragen: C: 0,08-0,25 %; Si: 0,10-1,00 %; Mn: 0,50-2,00 %; P: <0,020 %; S: <0,010 %; Cr: 0,10-2,00 %; Mo: 0-1,00 %; Ni: 0-2,00 %; Nb: 0,010-0,080 %; V: ≤0,10 %; Ti: ≤0,060 %; B: 0,0005-0,0040 %; Al: 0,010-0,080 %; Ca: 0,010-0,080 %; N: ≤0,0080 %; O: ≤0,0080 %; H: ≤0,0004 %; wobei der Rest aus Fe und unvermeidbaren Unreinheiten besteht, und wobei die vorgenannten Elemente gleichzeitig die folgenden Verhältnisse erfüllen: 0,20 %≤Cr/5+Mn/6+50B)≤0,55 %, 0,02 %≤(Mo/3+Ni/5+2Nb)≤0,45 %, und 0,01 %≤(Al+Ti)≤0,13 %;
2) Mischungsherstellung
Unterziehen einer zu mischenden Oberfläche der kontinuierlichen Gußbramme einer Oberflächeneisenoxidhautreinigung durch Verwenden eines mechanischen Verfahrens, und dann Unterziehen der vier Kanten der zu mischenden Oberfläche der kontinuierlichen Gußbramme einer Abkantungsverarbeitung; Aufeinanderlegen von 2 oder mehr kontinuierlichen Gußbrammen, und Unterziehen der berührenden Oberfläche der kontinuierlichen Gußbrammen einer peripheren Verschlussschweißung und Vakuumisierung, um eine Verbundplattenbramme zu erhalten;
3) Erhitzen und Walzen der Verbundplattenbramme
Erhitzen der Verbundplattenbramme bei einer Temperatur von 1000-1250 °C und Halten auf der Temperatur für 1 bis 5 Stunden; und Unterziehen der Verbundplattenbramme einem Verbundwalzen, wobei die Anfangswalztemperatur 1000-1150 °C beträgt und die Endwalztemperatur 780-980 °C beträgt; und
nach dem Walzen, Durchführen einer der folgenden Alternativen:
4) Streckenkühlung
nach dem Walzen, Durchführen einer Direktwasserkühlung auf eine Temperatur zwischen der Raumtemperatur und 450 °C; oder
4ii) Hitzebehandlung
nach dem Walzen, Durchführen einer Direktluftkühlung auf die Raumtemperatur, gefolgt von einem Abschrecken außerhalb der Strecke und Vergütungshitzebehandlungen, wobei die Abschreckungstemperatur 850-950 °C beträgt, und die Haltezeit, nachdem der Kernabschnitt der Stahlplatte die Temperatur erreicht hat, 10 bis 90 Minuten beträgt; und wobei die Vergütungstemperatur 100-450 °C beträgt, und die Haltezeit, nachdem der Kernabschnitt der Stahlplatte die Temperatur erreicht hat, 30 bis 120 Minuten beträgt.

3. Verfahren zum Herstellen der niedriglegierten, hochfesten, hochzähen Stahlplatte nach Anspruch 2, **dadurch gekennzeichnet, dass** ein kontinuierlicher Gußvorgang für das Gießen in Schritt 1) verwendet wird, bei einer kontinuierlichen Gußziehgeschwindigkeit von ≤ 1,0 m/min.

## Revendications

1. Plaque d'acier de ténacité élevée de résistance élevée faiblement alliée ayant une épaisseur de plaque de 80 mm ou supérieure, avec les constituants en pourcentage en masse étant : C : 0,08-0,25 % ; Si : 0,10-1,00 %, Mn : 0,50-2,00 % ; P : < 0,020 % ; S : < 0,010 % ; Cr : 0,10-2,00 % ; Mo : 0-1,00 % ; Ni : 0-2,00 % ; Nb : 0,010-0,080 % ; V : ≤ 0,10 % ; Ti : ≤ 0,060 % ; B : 0,0005-0,0040 % ; Al : 0,010-0,080 % ; Ca : 0,010-0,080 % ; N : ≤ 0,0080 % ; O : ≤ 0,0080 % ; H : ≤ 0,0004 % ; et le reste étant Fe et des impuretés inévitables, et en même temps, les éléments suivants satisfaisant les relations suivantes : 0,20 % ≤ (Cr/5 + Mn/6 + 50B) ≤ 0,55 %, 0,02 % ≤ (Mo/3 + Ni/5 + 2Nb) ≤ 0,45 %, et 0,01 % ≤ (Al + Ti) ≤ 0,13 % ;
dans laquelle ladite plaque d'acier de ténacité élevée de résistance élevée faiblement alliée présente une dureté Brinell de 390 HB à 460 HB, une limite apparente d'élasticité de 900 MPa à 1 100 MPa, une résistance à la traction de 1 100 MPa à 1 400 MPa, un taux d'allongement de 11 % à 15 %, et une énergie de résilience Charpy longitudinale à entaille en V à -40°C de ≥ 40 J ; et
dans laquelle la microstructure de ladite plaque d'acier de ténacité élevée de résistance élevée faiblement alliée est martensite + austénite résiduelle ou martensite + bainite + austénite résiduelle.

2. Procédé pour la fabrication d'une plaque d'acier de ténacité élevée de résistance élevée faiblement alliée, comprenant les étapes suivantes :
1) fusion et coulée
réalisation de fusion et coulée sur la base des ingrédients suivants pour former une plaque de coulée continue, les constituants chimiques de la plaque d'acier de ténacité élevée de résistance élevée faiblement alliée en pourcentage en masse étant : C : 0,08-0,25 % ; Si : 0,10-1,00 %, Mn : 0,50-2,00 % ; P : < 0,020 % ; S : < 0,010 % ; Cr : 0,10-2,00 % ; Mo : 0-1,00 % ; Ni : 0-2,00 % ; Nb : 0,010-0,080 % ; V : ≤ 0,10 % ; Ti : ≤ 0,060 % ; B : 0,0005-0,0040 % ; Al : 0,010-0,080 % ; Ca : 0,010-0,080 % ; N : ≤ 0,0080 % ; O : ≤ 0,0080 % ; H : ≤ 0,0004 % ; et le reste étant Fe et des impuretés inévitables, et en même temps, les éléments suivants satisfaisant les relations suivantes : 0,20 % ≤ (Cr/5 + Mn/6 + 50B) ≤ 0,55 %, 0,02 % ≤ (Mo/3 + Ni/5 + 2Nb) ≤ 0,45 %, et 0,01 % ≤ (Al + Ti) ≤ 0,13 % ;
2) combinaison
soumission d'une surface à combiner de la dalle de coulée continue à un nettoyage de peau d'oxyde de fer superficielle en utilisant une méthode mécanique, et puis soumission des quatre bords de la surface à combiner de la dalle de coulée continue à un procédé de nivellement ; superposition de 2 dalles de coulée continue ou plus, et soumission de la surface en butée des dalles de coulée continue à une fermeture par soudage périphérique et une mise sous vide pour obtenir une dalle de plaque combinée ;
3) chauffage et laminage de la dalle de plaque combinée
chauffage de la dalle de plaque combinée à une température de 1 000-1 250°C et maintien à la température pendant 1-5 h ; et soumission de la dalle de plaque combinée à un laminage combiné, dans lequel la température de laminage de départ est de 1000-1 150°C et la température de laminage de finition est de 780-980°C ; et après le laminage, réalisation d'une des alternatives suivantes :
4i) refroidissement en ligne
après le laminage, réalisation de refroidissement direct à l'eau à une température de la température ambiante à 450°C ; ou
4ii) traitement thermique
après le laminage, réalisation de refroidissement direct à l'air jusqu'à température ambiante, puis trempe hors ligne et traitements thermiques de revenu, dans lequel la température de trempe est de 850-950°C, et la durée de maintien après que la portion de cœur de la plaque d'acier a atteint la température est de 10-90 min ; et la température de revenu est de 100-450°C, et la durée de maintien après que la portion de cœur de la plaque d'acier a atteint la température est de 30-120 min.

3. Procédé pour la fabrication de la plaque d'acier de ténacité élevée de résistance élevée faiblement alliée selon la revendication 2, **caractérisé en ce qu'**un procédé de coulée continue est utilisé pour ladite coulée dans l'étape (1), à une vitesse d'étirage de coulée continue de ≤ 1,0 m/min.
